# EUROPEAN PATENT APPLICATION

(11) **EP 4 718 945 A1**
(43) Date of publication of application: **01.04.2026**
(21) Application number: 24383024.7
(22) Date of filing: 25.09.2024
(51) Int. Cl.: H05B 6/06, H05B 6/12, G01K 1/14, G01K 7/22, G01K 7/16

(54) **TEMPERATURE SENSOR ASSEMBLY FOR AN INDUCTION HOB**

(71) Applicant: Copreci, S.Coop., 20550 Aretxabaleta (ES)
(72) Inventor: ELCARTE MIGUEZ, Iker, 31001 Pamplona (ES); GARCIA ZARZOSA, Sergio, 48230 Elorrio (ES); LOIDI EGUREN, Ion, 20560 Bergara (ES); VICENTE ARANCETA, Pablo Igor, 48230 Elorrio (ES); GUTIERREZ IGLESIAS, Jesus, 20550 Aretxabaleta (ES)
(74) Representative: Galbaian S.Coop.

(57) **Abstract**

Temperature sensor assembly for an induction hob, comprising an axial thermistor (1) and a support (2) comprising a base (201) on which the thermistor (1) is arranged. The thermistor (1) comprises an elongated main body (10), a first pin (11) projecting axially from a first end (10a) of the main body (10), and a second pin (12) projecting axially from a second end (10b) of the main body (10). The main body (10) of the thermistor (1) is arranged horizontally on the base (201), the first pin (11) being connected to a first connecting cable forming a first connecting segment, and the second pin (12) being connected to a second connection cable forming a second connecting segment. The first pin (11) of the thermistor (1) comprises an initial bent segment and an additional segment following the initial segment which is arranged on the base (201) of the support (2) on one side of the main body (10) of the thermistor (1) and extends at least to the second end (10b) of the main body (10) according to an axial direction (X) defined by the main body (10).

## Description

### TECHNICAL FIELD

The present invention relates to temperature sensor assemblies for an induction hob.

### PRIOR ART

Temperature sensors are used in hobs to receive information about the current status of a hob element (e.g. a heating element) or an element with which the induction hob interacts (e.g. a pot or vessel), or to control the operation of the hob.

The temperature sensor is usually fixed to the hob by means of a support to ensure reliable temperature measurement. Different types of temperature sensors are commonly used.

EP3671043A1 discloses a temperature sensor assembly for an induction hob comprising an axial thermistor and a support comprising a base on which the thermistor is arranged. The axial thermistor comprises an elongated main body, a first pin projecting axially from a first end of the main body, and a second pin projecting axially from a second end of the main body, the main body of the thermistor being arranged horizontally on the base. The first pin is connected to a first connecting cable forming a first connecting segment and the second pin is connected to a second connecting cable forming a second connecting segment.

### DISCLOSURE OF THE INVENTION

The object of the invention is to provide a temperature sensor assembly for an induction hob and an induction hob comprising at least an induction heater and said temperature sensor assembly, as defined in the claims.

The temperature sensor assembly of the invention comprises an axial thermistor and a support comprising a base on which the thermistor is arranged. The thermistor comprises an elongated main body, a first pin projecting axially from a first end of the main body, and a second pin projecting axially from a second end of the main body.

The main body of the thermistor is arranged horizontally on the base. The first pin is connected to a first connecting cable forming a first connecting segment, and the second pin is connected to a second connecting cable forming a second connecting segment.

The first pin of the thermistor comprises an initial bent segment and an additional segment following the initial segment which is arranged on the base of the support on one side of the main body of the thermistor and extends at least to the second end of the main body in an axial direction defined by the main body. The inventors have found that by bending the first pin in this way, the accuracy of the temperature measurement is considerably improved, since the effect produced by the electromagnetic fields generated at the induction heater is minimised. This makes it possible to use axial thermistors instead of more expensive sensors, such as ceramic sensors for example, since a sufficiently good temperature measurement is obtained.

These and other advantages and features of the invention will become apparent in view of the figures and the detailed description of the invention.

### DESCRIPTION OF THE DRAWINGS

Figure 1 shows a simplified partial schematic view of an embodiment of the invention.
Figure 2 shows a perspective view of an embodiment of the invention.
Figure 3 shows a plan view of the embodiment of Figure 2.
Figure 4 shows a section view of the embodiment of Figure 2.
Figure 5 shows a perspective view of an induction heater of an induction hob comprising the temperature sensor assembly of Figure 2.
Figure 6 shows a section view of the induction heater of Figure 5 with the addition of a cooking plate.

### DETAILED DISCLOSURE OF THE INVENTION

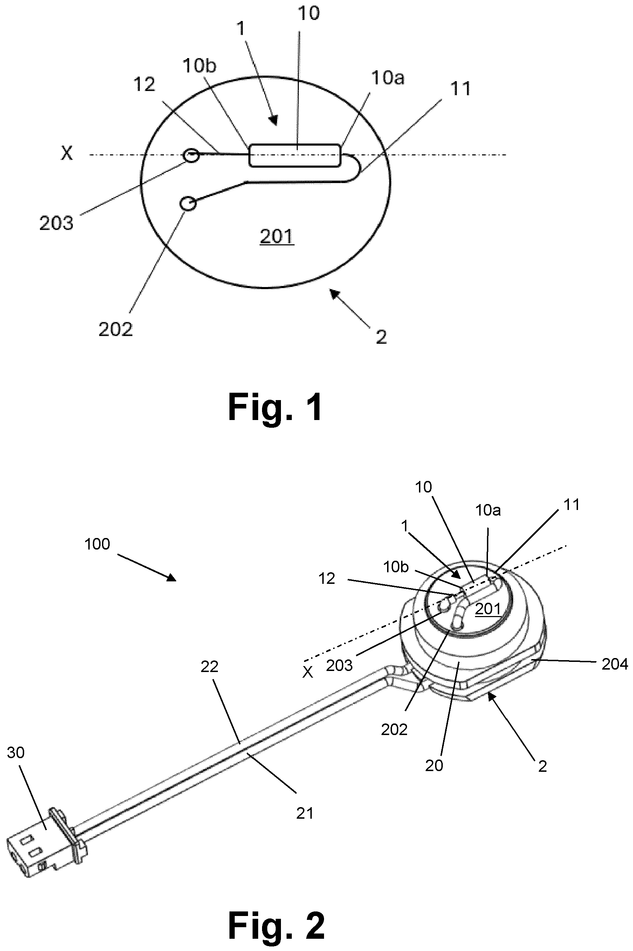

The temperature sensor assembly 100 of the invention comprises an axial thermistor 1 and a support 2 comprising a base 201 on which the thermistor 1 is arranged. As shown schematically in Figure 1, the thermistor 1 comprises an elongate main body 10, a first pin 11 projecting axially from a first end 10a of the main body 10, and a second pin 12 projecting axially from a second end 10b of the main body 10. The main body 10 of the thermistor 1 arranged horizontally on the base 201.

The first pin 11 is connected to a first connecting cable (not shown in Figure 1) forming a first connecting segment, and the second pin 12 is connected to a second connecting cable (not shown in Figure 1) forming a second connecting segment. In the embodiment shown in Figures 2 to 4, both connecting segments are connected to a connector 30 via the respective connecting cable.

As shown in Figures 1, 2 and 3, the first pin 11 of the thermistor 1 comprises an initial bent segment and an additional segment following the initial segment which is arranged on the base 201 of the support 2 on one side of the main body 10 of the thermistor 1 and extends at least to the second end 10b of the main body 10 according to an axial direction X defined by the main body 10. In this way, the effect produced by the electromagnetic fields generated at the induction heater is minimised and the accuracy of the temperature measurement by the thermistor 1 is considerably improved.

In a preferred embodiment, as shown in the figures, the initial bent segment of the first pin 11 of thermistor 1 is C-shaped.

In a preferred embodiment, as shown in the figures the additional segment of the first pin 11 of the thermistor 1 is parallel to the main body 10. This causes the additional segment to be arranged close to the main body 10, which helps to improve the accuracy of the temperature measurement.

In another preferred embodiment, not shown in the figures, the additional segment of the first pin 11 of the thermistor 1 forms an angle of less than 45° with respect to the main body 10.

In a preferred embodiment, the second pin 12 of the thermistor 1 comprises a straight initial segment.

As shown in the figures, in a preferred embodiment the first connecting segment (formed by the first pin 11 and the connecting cable to which it is connected) and the second connecting segment (formed by the second pin 12 and the connecting cable to which it is connected) pass through the base 201 of the support 2 through a respective first hole 202 and a second hole 203 arranged in the base 201.

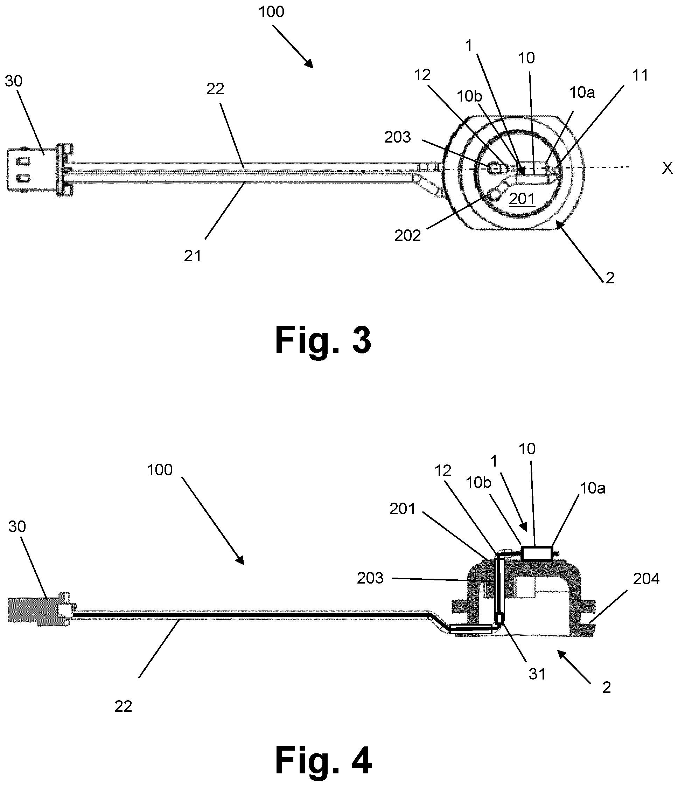

In a preferred embodiment, both holes 202 and 203 are arranged downstream of the second end 10b of the main body 10 along the axial direction X defined by the main body 10, as shown in Figures 1 and 3.

In a preferred embodiment, the additional segment of the first pin 11 of the thermistor 1 is oriented towards the first hole 202 and said first pin 11 passes through the first hole 202. In the embodiment shown in the figures (see for example Figure 1), the additional segment of the first pin 11 of the thermistor 1 is parallel to the main body 10 of the thermistor 1 and said first pin 11 comprises an end segment oriented towards the first hole 202 which passes through said hole 202 and which comprises an end connected to the first connecting cable. In an alternative embodiment, not shown in the figures, the additional segment of the first pin 11 of the thermistor 1 is a straight segment oriented towards the hole 202 and which passes through the said hole 202, the additional segment comprising an end connected to the first connecting cable.

In a preferred embodiment, as shown in Figure 4, the second pin 12 of the thermistor 1 is bent such that it passes through the base 201 of the support 2 through the second hole 203, the second pin 12 being connected to the respective connection cable below the base 201 of the support 2. The second pin 12 is connected to the connection cable via a junction 31.

In a preferred embodiment, as seen in Figures 1 and 3, the second hole 203 of the base 201 is aligned with the thermistor 1.

In a preferred embodiment, as shown in Figures 1 and 3, the first hole 202 and the second hole 203 are arranged side by side in the same axial position according to the axial direction X defined by the main body 10. Preferably the distance between the first hole 202 and the second hole 203 is smaller than the length of the main body 10 of the thermistor 1.

In a preferred embodiment, as shown in Figures 2 to 4, the first connecting cable and at least part of the first pin 11 are covered by a first insulating sheath 21, and the second connecting cable and at least part of the second pin 12 are covered by a second insulating sheath 22.

In a preferred embodiment, the support 2 is made of elastomeric material, preferably silicone. In a preferred embodiment the support 2 comprises a cylindrical body 20 projecting from the base 201 downwards, the cylindrical body 20 comprising at an end opposite the base 201 coupling means 204 for coupling the support 2 to an induction heater 200.

In a preferred embodiment, the thermistor 1 is a negative temperature coefficient (NTC) thermistor.

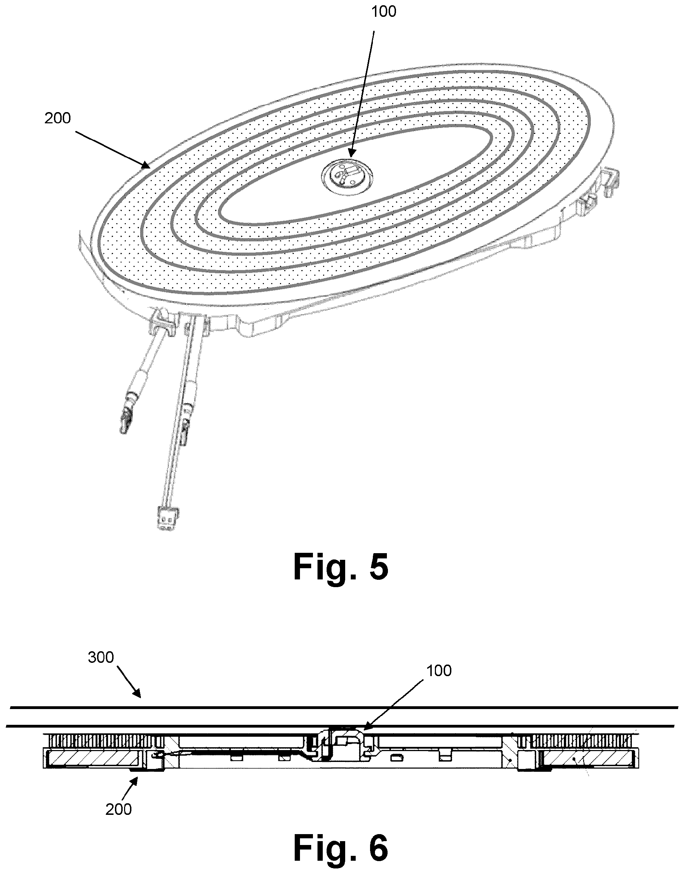

The invention also relates to an induction hob comprising a cooking plate 300, at least an induction heater 200 and a temperature sensor assembly 100 as described above associated with said induction heater 200. In a preferred embodiment, as shown in Figures 5 and 6, the temperature sensor assembly 100 is arranged coupled to the induction heater 200 in a central part of the induction heater 200. The thermistor 1 is preferably arranged in contact with the cooking plate 300.

## Claims

1. Temperature sensor assembly for an induction hob, comprising an axial thermistor (1) and a support (2) comprising a base (201) on which the thermistor (1) is arranged, the thermistor (1) comprising an elongated main body (10), a first pin (11) projecting axially from a first end (10a) of the main body (10) and a second pin (12) projecting axially from a second end (10b) of the main body (10), the main body (10) of the thermistor (1) being arranged horizontally on the base (201), wherein the first pin (11) is connected to a first connecting cable forming a first connecting segment, and wherein the second pin (12) is connected to a second connecting cable forming a second connecting segment, **characterised in that** the first pin (11) of the thermistor (1) comprises an initial bent segment and an additional segment following the initial segment which is arranged on the base (201) of the support (2) on one side of the main body (10) of the thermistor (1) and extends at least to the second end (10b) of the main body (10) according to an axial direction (X) defined by the main body (10).

2. Temperature sensor assembly according to claim 1, wherein the initial bent segment of the first pin (11) of the thermistor (1) is C-shaped.

3. Temperature sensor assembly according to claim 1 or 2, wherein the additional segment of the first pin (11) of the thermistor (1) is parallel to the main body (10) or forms with respect to the main body (10) an angle of less than 45°.

4. Temperature sensor assembly according to any of claims 1 to 3, wherein the second pin (12) of the thermistor (1) comprises an initial straight segment.

5. Temperature sensor assembly according to any of the preceding claims, wherein the first connecting segment and the second connecting segment pass through the base (201) of the support (2) through a respective first hole (202) and a second hole (203) provided in the base (201).

6. Temperature sensor assembly according to claim 5, wherein both holes (202, 203) are arranged downstream of the second end (10b) of the main body (10) according to the axial direction (X) defined by the main body (10).

7. Temperature sensor assembly according to claim 6, wherein the additional segment of the first pin (11) of the thermistor (1) is oriented towards the first hole (202) and said first pin (11) passes through the first hole (202).

8. Temperature sensor assembly according to claim 7, wherein the additional segment of the first pin (11) of the thermistor (1) is parallel to the main body (10) of the thermistor (1) and said first pin (11) comprises an end segment oriented towards the first hole (202) which passes through said hole (202) and which comprises an end connected to the first connecting cable.

9. Temperature sensor assembly according to claim 7, wherein the additional segment of the first pin (11) of the thermistor (1) is a straight segment oriented towards the first hole (202) and which passes through said hole (202), the additional segment comprising an end connected to the first connecting cable.

10. Temperature sensor assembly according to any of claims 5 to 9, wherein the second pin (12) of the thermistor (1) is bent such that it passes through the base (201) of the support (2) through the second hole (203), the second pin (12) being connected to the respective connection cable under the base (201) of the support (2).

11. Temperature sensor assembly according to any of claims 5 to 10, wherein the second hole (203) is aligned with the thermistor (1).

12. Temperature sensor assembly according to any of claims 5 to 11, wherein the first hole (202) and the second hole (203) are arranged side by side in the same axial position according to the axial direction (X) defined by the main body (10).

13. Temperature sensor assembly according to any of the preceding claims, wherein the first connecting cable and at least part of the first pin (11) are covered by a first insulating sheath (21), and the second connecting cable and at least part of the second pin (12) are covered by a second insulating sheath (22).

14. Induction hob comprising a cooking plate (300), at least an induction heater (200) and a temperature sensor assembly (100) according to any of the preceding claims associated with said induction heater (200).

15. Induction hob according to the preceding claim, wherein the temperature sensor assembly (100) is arranged coupled to the induction heater (200) in a central part of the induction heater (200).
